# EUROPEAN PATENT SPECIFICATION

(11) **EP 2 166 418 B1**
(45) Date of publication and mention of the grant of the patent: **24.10.2012**
(21) Application number: 08790113.8
(22) Date of filing: 01.07.2008
(51) Int. Cl.: G03H 1/20, B65D 25/20

(54) **Hologram pattern forming method**
Verfahren zur Formung eines Hologrammmusters
Procédé de formation d'un motif holographique

(30) Priority: 03.07.2007 JP 2007175056
(43) Date of publication of application: 24.03.2010
(73) Proprietor: Toyo Seikan Kaisha, Ltd., Shinagawa-ku Tokyo 141-8640 (JP)
(72) Inventor: AKIMOTO, Munekazu, Yokohama-shi Kanagawa 230-0001 (JP); HIRATA, Katsuyuki, Yokohama-shi Kanagawa 230-0001 (JP)
(74) Representative: Winter, Brandl, Fürniss, Hübner, Röss, Kaiser, Polte - Partnerschaft
(86) International application number: PCT/JP2008/001714
(87) International publication number: WO 2009/004789

(56) References cited:
- EP-A2- 0 201 323
- JP-A- 02 032 946
- JP-A- 11 268 746
- JP-A- 61 176 968
- JP-A- 61 190 369
- JP-A- 63 247 784
- JP-A- 2002 337 228
- US-A1- 2004 126 669

## Description

### TECHNICAL FIELD

The present invention relates to a method of forming an uneven hologram pattern on a base material and a container, onto which such a hologram pattern is stuck.

### BACKGROUND ART

In recent years, for a decoration purpose containers, packages, and other objects provided with a hologram pattern on an outer surface thereof have been proposed. A method in which this hologram pattern, which is an interference fringe pattern recorded on a plane surface and having a fine uneven shape in an embossed form or a relief form, is formed directly on an outer surface of a container, or a pattern which is formed separately is stuck to the outer surface of the container, have been proposed.

A method in which a metallic plate on which an uneven hologram pattern is connected to the outer surface of the container which is an object, has been proposed as a method of forming the hologram pattern directly on the outer surface of the container. Moreover, as a method for forming the hologram pattern separately, a method in which an uneven hologram pattern formed on a mother die made of a metallic thin film is formed by pressurizing on a thermoplastic resin or a ultraviolet-cured resin, and is adhered to the outer surface of the container after the resin is cured, has been proposed.

Examples of this known methods are to be found in JP Hei 10-32 9831, JP Hei 11-268746 and JP 2000-128176 A.

Moreover, JP 2002-337228 shows the possibility to emboss a thermoplastic decorative sheet by means of a roller such that indentations are formed in the substrate surface of the decorative sheet.

US 2004/0126669 A shows an iridescent film which is provided with a resin coating and the still uncured coating is processed by a set of holographic embossing rollers. After embossing the resin is cured in an oven.

### DISCLOSURE OF THE INVENTION

However, in the conventional hologram pattern forming method, in a case of forming directly on the outer surface of the container, whenever the pattern is to be formed on the container, a metallic plate on which the uneven hologram pattern is formed is to be consumed, thereby making a manufacturing cost high.

Moreover, even in a case of forming the hologram pattern separately, every time the pattern is to be formed, since the mother die made of the metallic thin film is to be exposed to a high temperature, and since a pressurized forming is used, the life of the mother die is susceptible to be shortened, and with a high manufacturing cost of the mother die, the cost for manufacturing the hologram is becoming high.

Furthermore, since steps of manufacturing a mother die, forming the hologram pattern, and adhering a film having the hologram pattern become necessary, it takes time for manufacturing, and there is a possibility that it leads to a steep rise in a container price.

Moreover, in the case of manufacturing the hologram pattern separately, for curing the thermoplastic resin or the ultraviolet-cured resin, as a heating unit, an ultraviolet-rays radiating unit, and other new equipments are to be added to the existing container manufacturing line, there is the possibility that there is a further rise in the manufacturing cost.

Another problem of known methods is durability and outer appearance or perceptibility of the holographic pattern or uneven pattern. For example, the pattern as produced by JP 2002-337228 suffers from the drawback that thermoplastic materials have poor durability.

Generally, there is a need for increasing durability and perceptibility of patterns in general and especially holographic patterns without increasing manufacturing costs.

Therefore, an object of the present invention is to provide a hologram pattern forming method which enables reduction of the manufacturing cost for forming hologram patterns of high mechanical and optical quality, while suppressing the cost of the mother die.

### MEANS FOR SOLVING THE PROBLEM

For solving the abovementioned problems, a hologram pattern forming method according to claim 1 is provided.

The method comprises a coating step of applying a coating of self-curable material on a base material, the self-curable material either being cured by vaporisation of a substance included therein or by a chemical reaction between substances included therein.

Following is an overlapping step of overlapping the yet uncured self-curable material which is applied on the base material in said coating step, on an uneven hologram pattern which is formed on a mother die made of an OPP film for transferring the hologram pattern onto the yet uncured self-curable material thus forming a uneven hologram pattern therein.

Next is a peeling step of peeling the self-curable material onto which the hologram pattern has been transferred and the mother die, said peeling step taking place after curing the self-curable material by leaving same at a room temperature.

Finally, a reflective-material layer or a transparent high refractive index material layer is formed by vapor deposition along the uneven shape of the hologram pattern in the cured self-curable material; and a material having the same refractive index as the hologram pattern is coated onto the cured self-curable material in a predetermined range thereof, thereby filling the uneven hologram pattern in said predetermined range.

In the hologram pattern forming method of the present invention, the self-curable material may include an isocyanate.

In the hologram pattern forming method of the present invention, the reflective material can include aluminum, nickel or silver.

In the hologram pattern forming method of the present invention, the transparent high refractive index material may include silicon oxide, zinc oxide, titanium oxide, aluminum oxide, zinc sulfide, a zirconium compound, or indium tin oxide.

A container of the present invention includes at least one of the abovementioned hologram patterns.

### EFFECTS OF THE INVENTION

According to the present invention, by forming a mother die of a resin, and by forming an uneven hologram pattern on a self-curable material, it is possible to reduce a manufacturing cost for the mother die, and to suppress a hike in a manufacturing cost of forming a hologram pattern on a container.

Moreover, since it is possible to use a general purpose adhesive as a self-curable material, it is possible to reduce a material cost and to suppress a development cost.

Furthermore, since there is no heating step and an ultraviolet-rays irradiating step for curing the resin, it is possible to widen a choice of material to be involved in the hologram pattern formation, and accordingly it is possible to reduce the manufacturing cost.

In providing a reflective-material layer or a transparent high refractive index material layer by vapor deposition along the uneven shape of the hologram pattern in the cured self-curable material, durability and/or optical properties of the hologram pattern can be enhanced or controlled in a simple way.

By applying a material having the same refractive index as the hologram pattern by coating onto the cured self-curable material in a predetermined range thereof, thereby filling the uneven hologram pattern in said predetermined range, the optical properties of the hologram pattern can also be enhanced or controlled in a simple way. Also the holographic effect can be restricted to the predetermined range.

The invention now will be described by way of example and with reference to the accompanying drawings.

### BRIEF DESCRIPTION OF THE DRAWINGS

Fig. 1 is a partially enlarged view showing a structure of a container on which, a hologram pattern is formed by a hologram pattern forming method according to an embodiment of the present invention;
Fig. 2 is a cross-sectional view showing a layer structure in each step of the hologram pattern forming method according to the embodiment of the present invention;
Fig. 3 is a table showing conditions and results of a peel-strength test; and
Fig. 4 is a schematic diagram showing an arrangement of each layer at the time of the peel-strength test.

### BEST MODE FOR CARRYING OUT THE INVENTION

An embodiment of the present invention will be described below in detail while referring to the accompanying diagrams.

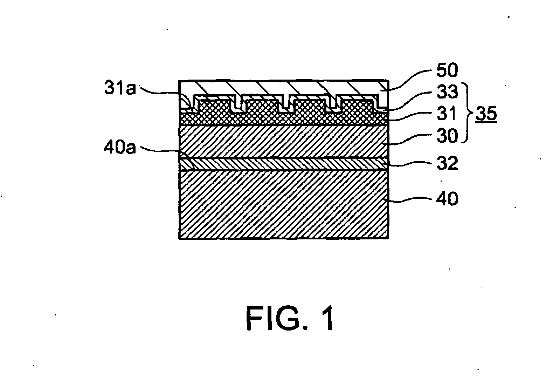

Fig. 1 is a partially enlarged view showing a structure near an outer peripheral surface 40a of a container 40 on which a hologram pattern 31a is formed by a hologram pattern forming method according to the embodiment. A film with a hologram pattern 35 (a laminate film) which is manufactured by the hologram pattern forming method according to the embodiment is fixed by adhering to the outer peripheral surface 40a of the container 40 as shown in Fig. 1. For maintaining a visibility of the hologram pattern in the embodiment, a vapor deposition layer 33 is formed along an uneven shape of the hologram pattern 31a, and furthermore, a surface protective layer 50 is formed additionally.

The hologram pattern forming method and a method for manufacturing film having hologram pattern according to the embodiment includes (1) a coating step of coating a self-curable material 31 on a base material 30, (2) an overlapping step of overlapping the uncured self-curable material 31 together with the base material 30 on a hologram pattern 10a of a resin mother die 10, and (3) a peeling step of peeling the self-curable material 31 on which, the hologram pattern has been transferred after overlapping, and the resin mother die 10, and the hologram pattern 10a of the resin mother die 10 is transferred on the self-curable material 31 on the base substrate 30, and accordingly, the base material 30 which includes the hologram pattern 31a is formed.

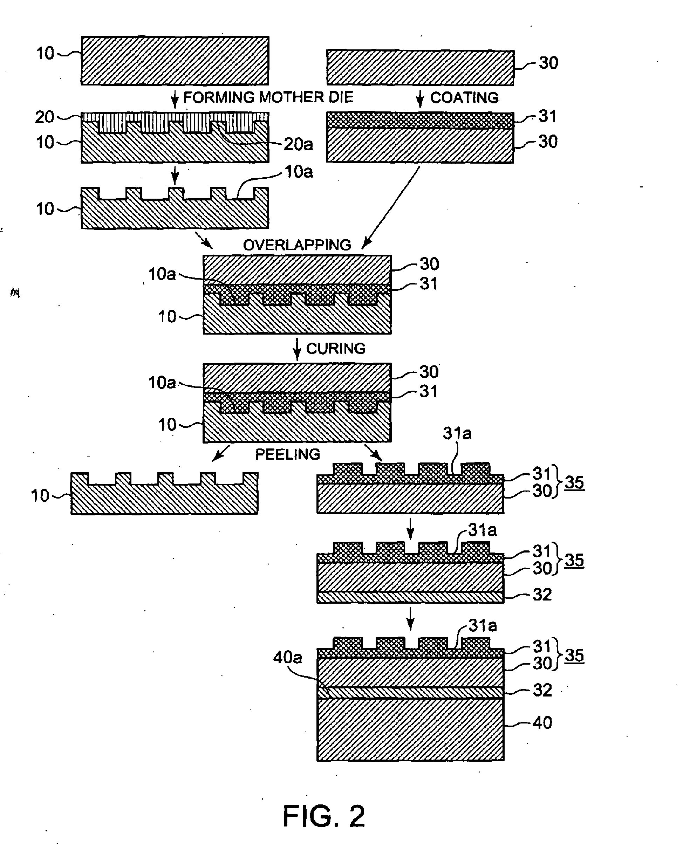

Here, Fig. 2 is a cross-sectional view showing a layer structure in each step of the hologram pattern forming method according to the embodiment. Details of each step, the hologram pattern forming method, and materials to be used in the method for manufacturing film having hologram pattern will be described below in detail. (1) Coating step

In the coatings step, the self-curable material 31 is coated on the base material 30. The coating can be carried out by transfer by a coating roll, atomization by spraying, and by spin coating. For the base material 30, it is preferable to use a PET film from a viewpoint of uniformity of strength and film thickness. Moreover, the base material 30 in a sheet form or a roll form can be used according to specifications and a type of a container which is an object on which the hologram pattern is to be formed.

The self-curable material 31 is a material which is cured by a substance included therein being vaporized (being gasified), or a material which is cured by a chemical reaction between substances included therein. Here, a material which is cured by a substance included therein being vaporized includes a material which is cured by a chemical reaction between the substance included therein, after the vaporization.

A two-component curable adhesive in which, a curing agent and a resin are dissolved in a solvent is preferable as the self-curable material 31. The following compounds (1) to (3) can be cited as examples of such two-component curable adhesive.
(1) Resins: polyester, urethane, epoxy, polyester polyurethane, polyester urethane polyol, urethane polyol, epoxy polyol, and polyester epoxy
(2) Curing agents: aliphatic isocyanates, aromatic isocyanates
(3) Solvents: ethyl acetate, methyl ethyl ketone, toluene, xylene, cyclohexanone, methanol, and ethanol Solvent which vaporize are available as a self-curable material which is cured by the substance included therein being vaporized, and as solvents which vaporize, ethyl acetate, methyl ethyl ketone, toluene, xylene, cyclohexanone, methanol, and ethanol are available. Furthermore, for resins and curing agents, the following combinations (A) and (B) are preferable.
   (A) Resin: polyester urethane polyol
      Curing agent: aromatic isocyanate
   (B) Resin: polyester
      Curing agent: aliphatic isocyanate.

The coating of the self-curable material 31 is carried out as follows.

When the self-curable material is of a two-component type, and is cured by a substance included therein being vaporized, firstly, a resin and a curing agent are dissolved in a solvent and coated on the base material 30. Next, after the solvent is vaporized by blowing hot air to the self-curable material 31, the resin mother die 10 is overlapped. Here, a temperature of the hot air to be used is in a range of 40°C to 90°C, and a temperature in a range of 50°C to 80°C is more preferable. A temperature higher than 100°C is not necessary. The self-curable material 31 with the solvent vaporized can be peeled from the resin mother die 10 without damaging the hologram pattern 31a which has been transferred. Thereafter, when heated further, the self-curable material 31 is cured thoroughly. In this manner, by vaporizing the solvent as a substance included therein, since the self-curable material 31 is in a state of being kept in a constant form in a short time, the resin mother die 10 is not required to overlap for a long time, and it is possible to improve a manufacturing efficiency. It is also possible to carry out peeling of the resin mother die 10 after the self-curable material 31 is thoroughly vaporized. Moreover, a coat weight after the solvent of the self-curable material 31 is thoroughly vaporized may be 0.1 g/m² or more, and the coat weight in a range of 0.3 g/m² to 10.0 g/m² was more preferable.

On the other hand, in a case of a self-curable agent which is cured by a chemical reaction between substances included therein, similarly as in a case of curing by a substance included therein being vaporized, firstly, a resin and a curing agent are dissolved in a solvent, and coated on the base substrate 30. Next, after the solvent is vaporized by blowing hot air to the self-curable material 31, the resin mother die 10 is overlapped and left. According to properties of the self-curable material 31, the self-curable material 31 may be left at a temperature in a range of 20°C to 70°C, and more preferably at a temperature in a range of 35°C to 60°C, for half a day or more, and more preferably for one day to seven days, and thereafter the resin mother die 10 is peeled. Furthermore, the self-curable material 31 may be heated for curing thoroughly. The solvent is to be added for rendering easy the coating of the self-curable material 30 on the base material 30, and it is not required to be added necessarily when the coating is possible only by mixing a resin and a curing agent. When a solvent is not to be added, hot air may not be blown before overlapping with the resin mother die 10. Moreover, the coat weight after the solvent of the self-curable material 31 is thoroughly vaporized may be 0.1 g/m² or more, and the coat weight in the range of 0.3 g/m² to 10.0 g/m² was more preferable.

When a two-component curable adhesive as described above is used, a high-temperature heating and irradiation of ultraviolet rays becomes unnecessary, and is preferable as it has superior heat resistance, hot-water resistance, and adhesiveness after curing. For example, when the heat resistance is superior, a film having a hologram pattern which is formed, can be used for containers which necessitate retort sterilization, typified by cans and pouches for food including beverages. For the self-curable material 31, a self-curable material other than that of two-component type can be used, provided that the self-curable material does not necessitate the high-temperature heating and the ultraviolet-rays irradiation.

Here, forming of the resin mother die 10 which overlaps the self-curable material 31 in the subsequent overlapping step will be described. The resin mother die 10 is formed by pressing a basic pattern 20 on which an uneven hologram pattern is formed in advance, against a surface of a mother die material (thermocompression forming). Ficcordingly, the fine uneven hologram pattern 20a formed on the basic pattern 20 is transferred to a surface of the resin mother die 10. For the resin mother die 10, a film such as an OPP film, a nylon (trademark) film, a PET (polyethylene terephthalate) film can be use, and the OPP film is preferable from a viewpoint of peelability. Moreover, the resin mother die 10 in a sheet form or a roll form can be used according to specifications and a type of an object on which the hologram pattern is to be formed.

The basic pattern 20 which is used for forming the resin mother die 10 can be formed by a hitherto known method, and for example, is formed as follows. Firstly, a laser interference film is exposed on a plate on which a photoresist is applied, and an uneven resist pattern according to a density of an interference fringe. Next, a thin film is formed by vapor depositing a metal on the resist pattern to let to have electroconductivity, and nickel is plated thereon. Finally, by peeling a plating layer, the basic pattern 20 having a fine uneven hologram pattern transferred precisely on nickel, is formed.

### (2) Overlapping step

Next, the self-curable material 31 on the base material 30 is overlapped on the resin mother die 10 and the hologram pattern 10a which has been formed on the resin mother die 10 is transferred on the self-curable material 31. The overlapping is carried out by pressing the resin mother die 10 and the base material 30 mutually in a state of the uncured self-curable material 31 coated on the base material 30 making a contact with the uneven hologram pattern 10a which has been formed on the resin mother die 10. A pressure of pressing is set according to a resolution of the hologram pattern, and material properties of the resin mother die 10 and the self-curable material 31. By pressing the base material 10 on the resin mother die 10, the hologram pattern 10a of the resin mother die 10 is transferred on the self-curable material 31 as the hologram pattern 31a.

When the self-curable material 31 is a material which is cured by a substance included therein being vaporized, the resin mother die 10 is overlapped on the self-curable material 31 from which a solvent is vaporized by blowing hot air. The self-curable material 31 having the solvent therein vaporized, is in a state in which, an uneven shape can be fixed corresponding to the hologram pattern 10a of the resin mother die 10 which is overlapped, while keeping a constant shape, till the curing is completed by a chemical reaction between the remaining substances.

On the other hand, when the self-curable material 31 is a material which is cured by a chemical reaction between substances included therein, when the resin mother die 10 and the self-curable material 31 are kept in an overlapped state, the self-curable material 31 is cured, and a fine uneven shape corresponding to the hologram pattern 10a of the resin mother die 10 is fixed on the self-curable material 31 as the hologram pattern 31a. The overlapping step can be carried out at a room temperature, and it can also be carried out while heating, according to properties of the self-curable material 31 and a time permissible to the overlapping step in a manufacturing process. Moreover, in the overlapping, for instance, when the resin mother die 10 and the base material 10 are let to pass between a pair of rollers which are heated, the hologram pattern 10a of the resin mother die 10 can be transferred on the self-curable material 31 more assuredly, and it is possible to reduce the time taken for the overlapping step by expediting a reaction of curing the self-curable material 31. The temperature of the pair of rollers in this case is in a range of 40°C to 90°C, and a range of 50°C to 80°C is more preferable. A high temperature such as a temperature higher than 100°C is not necessary.

### Peeling process

In the peeling process, the self-curable material 31 which has been cured in the overlapping step, is peeled from the resin mother die 10 together with the base material 30. Accordingly, it is possible to draw a film having a hologram pattern with a structure in which, the self-curable material 31 having the hologram pattern 31a formed on an upper surface thereof is stacked on the base material 30. The resin mother die 10 after peeling can be used repeatedly.

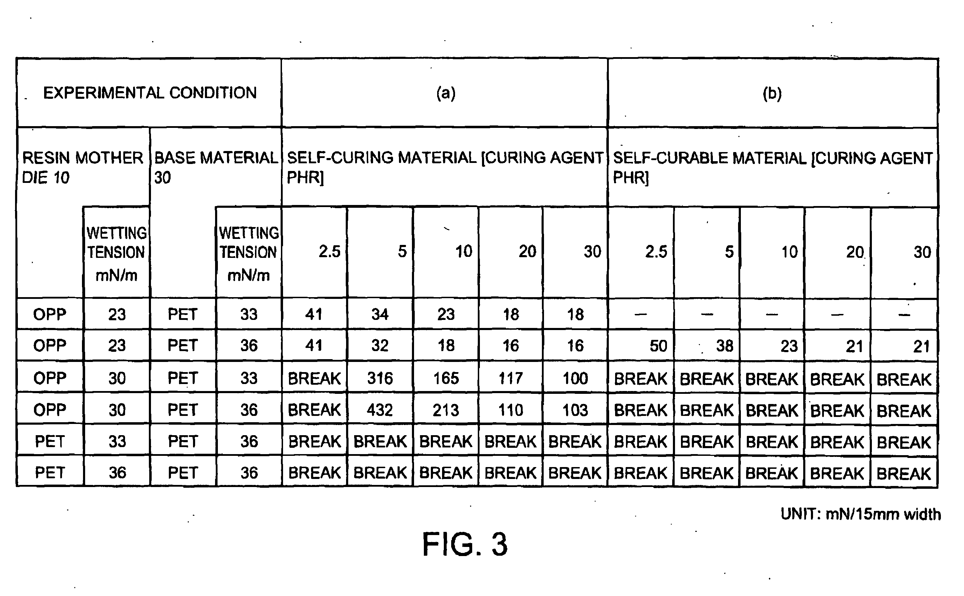

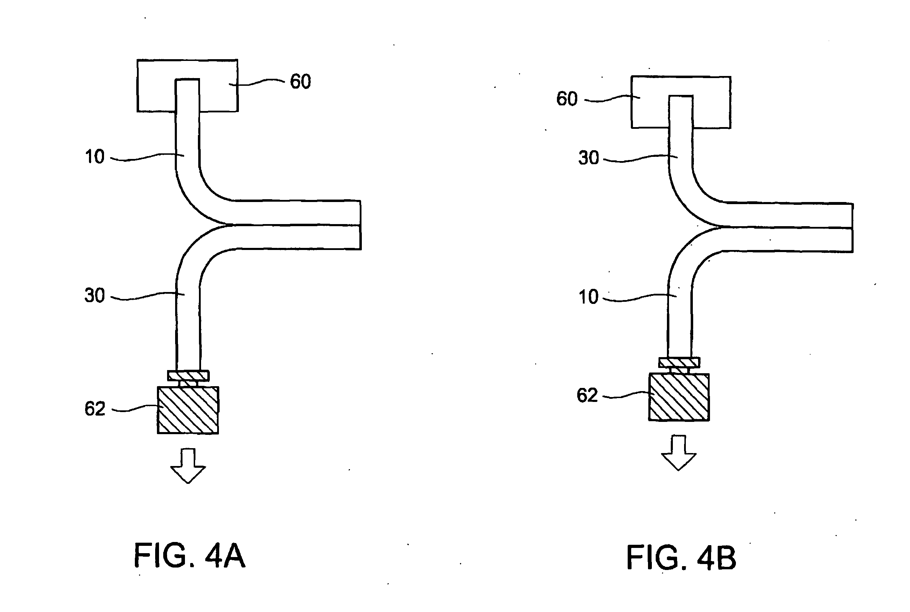

Here, a peel-strength test carried out for a relationship of a wetting tension and a peelability of the base material 30 and the resin mother die 10 will be described below while referring to Fig. 3 and Fig. 4. Fig. 3 is a table showing conditions and results of the peel-strength test, and Fig. 4 is a schematic diagram showing an arrangement of each layer at the time of the peel-strength test. Moreover, column (a) and column (b) in Fig. 3 show test results corresponding to (a) and (b) respectively in Fig. 4. In Fig. 4, a diagrammatic representation of the self-curable material 31 is omitted.

Material used for each layer is as follows (Fig. 3). A laminate film is let to be in the form of a strip of a width 15 mm.
(1) Base material 30: PET film (thickness 12µm, wetting tension 35 mN/m, 36 mN/m)
(2) Self-curable material 31: LX963/KW75 (manufactured by Dai Nippon Ink and Chemicals Industries Ltd.) This self-curable material 31 matches the abovementioned combination (A), or in other words, the combination of resin: polyester urethane polyol, and curing agent: aromatic isocyanate. Moreover, for rendering the coating easy, ethyle acetate was used as a solvent. The coat weight after the solvent is vaporized was let to be 3.6 g/m².
(3) Resin mother die 10: OPP film (thickness 20 µm, wetting tension 23 mN/m, 30 mN/m), PET film (thickness 12 µm, wetting tension 33 mN/m, 36 mN/m) of four types, or in other words, the wetting tension of each of the base material 10 is 33 mN/m or more, and the resin mother die 10 includes a material of less than 30 mN/m and a material of 30 mN/m or more.

A proportion of the curing agent in the self-curable material 31 was let to be 2.5, 5, 10, 20, and 30 (unit PHR (per hundred resin)), and was cured under condition of 55°C for three days.

In the laminate film formed with the abovementioned conditions, as shown in Fig. 4(a), one end of the resin mother die 10 was fixed to a wall 60, and the test was carried out by leaving with a spindle 62 hanging to one end of the base material 10 corresponding to the one end of the resin mother die 10. The spindle 62 was changed to a heavier spindle one by one till a peeling or a breakage occurred in the film, and the peel strength was measured by a weight of the spindle 62 at this time. Moreover, as shown in Fig. 4(b), one end of the base material 30 was fixed to the wall 60, and the test was carried out by leaving with a spindle 62 having to one end of the resin mother die 10 corresponding to the one end of the base material 30.

Results of the measurement were as shown in column (a) and column (b) in Fig. 3, and when the wetting tension of the base material 30 was 33 mN/m or more, in a model in which, the resin mother die 10 is let to be an OPP film having the wetting tension of less than 30 mN/m, the resin mother die 10 could be peeled without being broken. An entire peeling interface was an interface of the OPP film and the self-curable material 31 Whereas, in a model in which, the resin mother die 10 was let to be a PET film or an OPP film having the wetting tension of 30 mN/m or more, the film broke, or needed an extremely substantial peel strength. Consequently, it was revealed that for small wetting tension of the resin mother die 10, the peelability is favorable.

Moreover, when the peel strength for peeling the resin mother die 10 from the self-curable material 31 is less than 100 mN per width 15 mm of the resin mother die 10, since there is a small possibility of damaging the resin mother die 10, it is preferable.

Next, for improvement of the film having a hologram pattern 35, and a design of an outward appearance of an object on which the film having a hologram pattern 35 is stuck, and for improvement of a durability of the hologram pattern 31a, and for other purposes, it is preferable to carry out vapor deposition on the hologram pattern 31a. The vapor deposition forms a layer 33 along an uneven pattern of the hologram pattern 31a, and forms a layer such as a reflective-material layer and a transparent high refractive index material layer. By forming a layer along the uneven pattern of the hologram pattern 31a, it is possible to facilitate the improvement in a design of outward appearance, and the improvement in durability while maintaining a visual effect by the hologram pattern 31a on the self-curable material 31. When it is possible to form a layer along the pattern without filling the uneven shaped pattern of the hologram pattern 31a, it is possible to carry out layer formation by a method (such as sputtering) other than vapor deposition. A vapor deposition layer to be formed on the hologram pattern 31a will be described below.

The reflective-material layer is a layer which reflects light incident on the self-curable material 31 according to a pattern shape of the hologram pattern 31a, and is a layer which contributes to the improvement of the film having a hologram pattern 35, and the design of the outward appearance of the object on which the film having a hologram pattern 35 is stuck. Materials such as aluminum, nickel, and silver are available as a material which can be used for the reflective-material layer.

Whereas, when the transparent high refractive index material layer is provided, it is possible to prevent the hologram pattern 31a from being affected by an ambient surrounding. Furthermore, when the film having a hologram pattern 35 is stuck to a surface of a container, it is possible to prevent the unevenness of the hologram pattern 31a from being filled, or the surface of the hologram pattern 31a being contaminated due to oil and other substances stuck to hands of a person who touches the container. As a material which can be used for the transparent high refractive index material layer, a material having a refractive index higher by 20% or more, and more preferably higher by 30% or more than a refractive index of the self-curable material 31 to an extent that a visibility of the hologram pattern 31a is not diminished even after the vapor deposition, is preferable, and materials such as silicon oxide, zinc oxide, titanium oxide, aluminum oxide, zinc sulfide, a zirconium compound, and indium tin oxide (ITO) are available.

Vapor deposition is preferable for forming on the self-curable material 31, the reflective-material layer of a material such as aluminum and nickel, and the transparent high refractive index material layer of a material such as silicon oxide, zinc oxide, titanium oxide, aluminum oxide, zinc sulfide, a zirconium compound, or indium tin oxide. When a thin film of the reflective-material layer or the transparent high refractive index material layer is formed along the uneven shape of the hologram pattern 31a by the vapor deposition, there is almost no degradation of visibility of the hologram pattern due to an effect of contamination by dirt from the hand and an ambient surrounding such as adhering of water of dew formation. When a thin film of the reflective-material layer or the transparent high refractive index material is formed, there is almost no degradation of visibility of the hologram pattern even when the surface protective layer 50 (Fig. 1) having a refractive index same as of the refractive index of the self-curable material 31 is imparted.

The film having a hologram pattern 35 manufactured by the abovementioned process is stuck to the container 40. Sticking is carried out by forming an adhesive layer 32 on a surface of the base material 30 on an opposite side of the self-curable material 31, and by adhering to an outer peripheral surface of the container 40 by this adhesive layer 32. Containers such as a can, a plastic container, a paper container, and a container including aluminum can be cited as examples of the container 40. It is also possible to stick the film having a hologram pattern 35 to an object other than a container (such as a package and a book).

Moreover, regarding a necessary range on the self-curable material 31, when the uneven pattern is filled by stacking a material (such as a paint) having a refractive index same as a refractive index of the hologram pattern 31a, it is possible to erase intentionally a hologram effect in this range. When this phenomenon is used, it is possible to design freely an area in which the hologram pattern 31a is to be formed. For being structured as described above, according to the embodiment described above, the following effects (1) to (3) are shown.
(1) By forming the mother die of a resin, it is possible to reduce a manufacturing cost for the mother die.
(2) By forming the hologram pattern on the self-curable material 31, since there is no need to introduce a heating unit, an ultraviolet rays radiating unit, and other new equipments, it does not lead to a hike in the manufacturing cost.
(3) Since the self-curable material 31 is used, it is possible to widen a choice of a material which forms the hologram pattern.

Although the present invention has been described while referring to the abovementioned embodiment, the present invention is not restricted to the abovementioned embodiment, and modifications and changes within a range of an object of the modification and basic teachings of the present invention are possible.

### DESCRIPTION OF REFERENCE NUMERALS

10 resin mother die
10a hologram pattern
20 basic pattern
20a hologram pattern
30 base material
31 self-curable material
31a hologram pattern
32 adhesive layer
33 vapor deposition layer
35 film having hologram pattern (laminate film)
40 container (object)
50 surface protective layer

## Claims

1. A hologram pattern forming method comprising:
a coating step of applying a coating of self-curable material (31) on a base material (30), the self-curable material (31) adapted to be cured by a chemical reaction between substances included therein;
an overlapping step of overlapping the yet uncured self-curable material (31) which is applied on the base material (30) in said coating step, on an uneven hologram pattern (10a) which is formed on a mother die (10) made of an organic polypropylene film for transferring the hologram pattern (10a) onto the yet uncured self-curable material (31) thus forming a uneven hologram pattern (31 a) therein; and
a peeling step of peeling the self-curable material (31) onto which the hologram pattern (10a) has been transferred and the mother die (10), said peeling step taking place after curing the self-curable material (31) by leaving the self-curable material at room temperature, wherein
a reflective-material layer (33) or a transparent high refractive index material layer (33) is formed by vapor deposition along the uneven shape of the hologram pattern (31a) in the cured self-curable material (31); and
a material having the same refractive index as the hologram pattern (31 a) is coated onto the cured self-curable material (31) in a predetermined range thereof, thereby filling the uneven hologram pattern (31a) in said predetermined range.

2. The hologram pattern forming method according to claim 1, wherein the self-curable material (31) includes an isocyanate.

3. The hologram pattern forming method according to claim 1 or 2, wherein the material in said reflective material layer (33) includes aluminium, nickel or silver.

4. The hologram pattern forming method according to any one of claims 1 to 3, wherein the material in said transparent high refractive index material layer (33) includes silicon oxide, zinc oxide, titanium oxide, aluminium oxide, zinc sulphide, a zirconium compound or indium tin oxide.

5. A carrier or container (40), onto which at least one hologram patter formed according to one of the preceding claim is stuck.

## Patentansprüche

1. Ein Verfahren zur Formung eines Hologrammmusters, aufweisend:
einen Beschichtungsschritt des Aufbringens einer Beschichtung aus selbst aushärtendem Material (31) auf einem Basismaterial (30), wobei das selbst aushärtende Material (31) durch eine chemische Reaktion zwischen hierin enthaltenen Substanzen ausgehärtet zu werden vermag;
einen Überlagerungsschritt des Überlagerns des noch nicht ausgehärteten selbst aushärtenden Materials (31), welches auf das Basismaterial (30) in dem Beschichtungsschritt aufgebracht worden ist, auf ein unebenes Hologrammmuster (10a), welches auf einer Urform (10) aus einem organischen Polypropylen-Film gebildet ist, um das Hologrammmuster (10a) auf das noch nicht ausgehärtete selbst aushärtende Material (31) zu übertragen, so dass hierin ein unebenes Hologrammmuster (31a) gebildet wird; und
einen Ablöseschritt des Ablösens des selbst aushärtenden Materials (31), das auf das Hologrammmuster (10a) übertragen wurde, von der Urform (10), wobei der Ablöseschritt stattfindet, nachdem das selbst aushärtende Material (31) ausgehärtet ist, indem das selbst aushärtende Material bei Raumtemperatur gelassen wurde, wobei
eine Schicht (33) aus einem reflektierendem Material oder eine Schicht (33) aus einem transparentem Material mit hohem Brechungsindex durch Dampfabscheidung entlang der unebenen Form des Hologrammmusters (31a) in dem ausgehärteten selbst aushärtenden Material (31) ausgebildet wird; und
ein Material mit dem gleichen Brechungsindex wie das Hologrammmuster (31a) auf das ausgehärtete selbst aushärtende Material (31) in einem bestimmten Bereich hiervon aufgebracht wird, so dass das unebene Hologrammmuster (31a) in dem bestimmten Bereich ausgefüllt wird.

2. Das Verfahren zur Formung eines Hologrammmusters nach Anspruch 1, wobei das selbst aushärtende Material (31) ein Isocyanat enthält.

3. Das Verfahren zur Formung eines Hologrammmusters nach Anspruch 1 oder 2, wobei das Material in der Schicht (33) aus reflektierendem Material Aluminium, Nickel oder Silber enthält.

4. Das Verfahren zur Formung eines Hologrammmusters nach einem der Ansprüche 1 bis 3, wobei das Material in der Schicht (33) aus transparentem Material mit hohem Brechungsindex Siliziumoxid, Zinkoxid, Titanoxid, Aluminiumoxid, Zinksulfid, eine Zirkoniumzusammensetzung oder Indiumzinnoxyd enthält.

5. Ein Träger oder Behälter (40), an welchen wenigstens ein Hologrammmuster, ausgebildet nach einem der vorhergehenden Ansprüche, angeheftet ist.

## Revendications

1. Procédé de formation d'un motif holographique comprenant :
une étape de revêtement consistant à appliquer un revêtement de matériau auto-durcissable (31) sur un matériau de base (30), le matériau auto-durcissable (31) étant adapté pour être durci par une réaction chimique entre des substances y étant incluses ;
une étape de chevauchement consistant à chevaucher le matériau auto-durcissable (31) pas encore durci qui est appliqué sur le matériau de base (30) dans ladite étape de revêtement, sur un motif holographique irrégulier (10a) qui est formé sur une matrice mère (10) constituée d'un film de poly(propylène) organique afin de transférer le motif holographique (10a) sur le matériau auto-durcissable (31) pas encore durci formant ainsi un motif d'hologramme irrégulier (31a) à l'intérieur ; et
une étape de pelage consistant à peler le matériau auto-durcissable (31) sur lequel le motif holographique (10a) a été transféré et la matrice mère (10), ladite étape de pelage ayant lieu après le durcissement du matériau auto-durcissable (31) en laissant le matériau auto-durcissable à température ambiante, dans lequel
une couche de matériau réfléchissant (33) ou une couche de matériau à indice de réfraction élevé (33) transparente est formée par dépôt en phase vapeur le long de la forme irrégulière du motif holographique (31a) dans le matériau auto-durcissable durci (31) ; et
un matériau ayant le même indice de réfraction que le motif d'hologramme (31a) est revêtu sur le matériau auto-durcissable durci (31) dans une plage préétablie de ce dernier, remplissant ainsi le motif holographique irrégulier (31a) dans ladite plage prédéterminée.

2. Procédé de formation d'un motif holographique selon la revendication 1, dans lequel le matériau auto-durcissable (31) comprend un isocyanate.

3. Procédé de formation d'un motif holographique selon la revendication 1 ou 2, dans lequel le matériau dans ladite couche de matériau réfléchissante (33) comprend de l'aluminium, du nickel ou de l'argent.

4. Procédé de formation d'un motif holographique selon l'une quelconque des revendications 1 à 3, dans lequel le matériau dans ladite couche de matériau à indice de réfraction élevé (33) transparente comprend de l'oxyde de silicium, de l'oxyde de zinc, de l'oxyde de titane, de l'oxyde d'aluminium, du sulfure de zinc, un composé de zirconium ou un oxyde d'étain et d'indium.

5. Support ou contenant (40), sur lequel est plaqué au moins un motif holographique formé selon l'une quelconque des revendications précédentes.
